(19) Europäisches Patentamt
European Patent Office
Office européen des brevets

(11) **EP 4 708 761 A1**

(12) **EUROPEAN PATENT APPLICATION**
published in accordance with Art. 153(4) EPC

(43) Date of publication:
**11.03.2026 Bulletin 2026/11**

(21) Application number: **24815202.7**

(22) Date of filing: **15.05.2024**

(51) International Patent Classification (IPC):
*H04L 7/00* (2006.01)

(52) Cooperative Patent Classification (CPC):
**H04L 7/00**

(86) International application number:
**PCT/JP2024/017885**

(87) International publication number:
**WO 2024/247718 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.05.2023 JP 2023088225**

(71) Applicants:
• **MITSUBISHI ELECTRIC CORPORATION**
Chiyoda-ku
Tokyo 100-8310 (JP)
• **NTT, Inc.**
Tokyo 100-8116 (JP)

(72) Inventors:
• **MATSUSHITA, Ryuma**
Tokyo 100-8310 (JP)
• **TANIGUCHI, Sachiko**
Tokyo 100-8310 (JP)
• **KASAHARA, Saburo**
Tokyo 100-8310 (JP)
• **YAMAGATA, Keisuke**
Musashino-shi, Tokyo 180-8585 (JP)
• **KUBO, Takahiro**
Musashino-shi, Tokyo 180-8585 (JP)
• **NAKANISHI, Takashi**
Musashino-shi, Tokyo 180-8585 (JP)

(74) Representative: **Pfenning, Meinig & Partner mbB**
**Patent- und Rechtsanwälte**
**An der Frauenkirche 20**
**01067 Dresden (DE)**

(54) **CONVERSION DEVICE, CONVERSION PROGRAM, AND CONVERSION METHOD**

(57) A conversion device (100) includes a Sync message processing unit (11), a Follow_Up message processing unit (12), a Delay_Req message processing unit (13), a Delay_Resp message processing unit (14), a Pdelay_Req message processing unit (21), a Pdelay_Resp message processing unit (22), a Pdelay_Resp_Follow_Up message processing unit (23), an upper-side transmission delay calculation unit (40) that calculates a transmission delay time pt1 between a master device (200) and the conversion device (100), an internal processing time calculation unit (50) that calculates an internal processing time of the conversion device (100), and a CF processing unit (60) that stores a total value of pt1 and the internal processing time in a Follow_Up message.

Fig. 6

EP 4 708 761 A1

## Description

### Technical Field

The present disclosure relates to a conversion device, a conversion program, and a conversion method that convert a transmission delay measurement method of an upper device to a transmission delay measurement method of a lower device when the transmission delay measurement methods differ between the upper device performing a PTP (Precision Time Protocol) communication and the lower device performing the PTP communication.

### Background Art

The precision time protocol (hereafter, PTP), which is defined in Non-Patent Literature 1, is a protocol that realizes precise synchronization of clocks in packet-based network systems.

According to the PTP, a format called a profile is defined for each field, and time synchronization fails between different profiles. Therefore, it is necessary to build time distribution networks separately for each field, resulting in high costs. One of the reasons why time synchronization fails between different profiles is the difference in methods of transmission delay measurement. In Transparent Clock, there exist two types of transmission delay measurement methods of End-to-End and Peer-to-Peer, and since the messages used therein differ from each other, time synchronization fails.

### Citation List

### Non-Patent Literature

Non-Patent Literature 1: IEEE Std 1588TM-2019 IEEE Standard for a Precision Clock Synchronization Protocol for Networked Measurement and Control Systems

### Summary of Invention

### Technical Problem

The present disclosure aims at providing a device that enables time synchronization even in a case where two types of different transmission delay measurement methods, such as End-to-End and Peer-to-Peer, are employed between an upper device and a lower device to be synchronized with the clock of the upper device.

### Solution to Problem

The conversion device according to the present disclosure is a conversion device to convert a transmission delay measurement method of an upper device to a transmission delay measurement method of a lower device when transmission delay measurement methods differ between the upper device that performs a precision time protocol (PTP) communication and the lower device that performs the PTP communication.

The conversion device according to the present disclosure includes:

a Sync message processing unit to receive a Sync message that is transmitted from the upper device and record a reception time dt1, and to record a transmission time dt2 of the Sync message when the Sync message is transmitted to the lower device to be relayed;
a Follow_Up message processing unit to extract, from a Follow_Up message in which a transmission time T1 of the Sync message from the upper device is stored and which is transmitted from the upper device, the transmission time T1 of the Sync message from the upper device;
a Delay_Req message processing unit to transmit a Delay_Req message to the upper device, and to record a transmission time T3 of the Delay_Req message;
a Delay_Resp message processing unit to extract, from a Delay_Resp message in which a reception time T4 of the Delay_Req message is stored and which is transmitted from the upper device, the reception time T4 of the Delay_Req message;
a Pdelay_Req message processing unit to record a reception time t2 of a Pdelay_Req message that is transmitted from the lower device;
a Pdelay_Resp message processing unit to store the reception time t2 of the Pdelay_Req message in a Pdelay_Resp message, and to transmit the Pdelay_Resp message in which the reception time t2 of the Pdelay_Req message is stored, to the lower device;

a Pdelay_Resp_Follow_Up message processing unit to store a transmission time t3 of the Pdelay_Resp message in a Pdelay_Resp_Follow_Up message, and to transmit the Pdelay_Resp_Follow_Up message in which the transmission time t3 of the Pdelay_Resp message is stored, to the lower device;

an upper-side transmission delay calculation unit to calculate a transmission delay time pt1 between the upper device and the conversion device by using the reception time dt1 of the Sync message, the transmission time T1 of the Sync message from the upper device, the transmission time T3 of the Delay_Req message, and the reception time T4 of the Delay_Req message;

an internal processing time calculation unit to calculate an internal processing time of the conversion device by using the reception time dt1 of the Sync message, and the transmission time dt2 to relay the Sync message; and

a total value storage unit to store a total value of the transmission delay time pt1 between the upper device and the conversion device, and the internal processing time of the conversion device, in a CorrectionField in the Follow_Up message, and to transmit the Follow_Up message in which the total value is stored, to the lower device to be relayed.

**Advantageous Effects of Invention**

The conversion device according to the present disclosure includes a Delay_Req message processing unit, a Delay_Resp message processing unit, an upper-side transmission delay calculation unit, and a total value storage unit. Therefore, the conversion device according to the present disclosure enables time synchronization even when two types of different delay measurement methods, such as End-to-End and Peer-to-Peer, are employed between an upper device and a lower device to be synchronized with the clock of the upper device.

**Brief Description of Drawings**

Fig. 1 is a diagram of First Embodiment, illustrating an operation of a TC 101 as a first comparative example of a conversion device 100;

Fig. 2 is a diagram of First Embodiment, illustrating an operation of a TC102 as a second comparative example of the conversion device 100;

Fig. 3 is a diagram of First Embodiment describing an outline of the operation of the conversion device 100, which illustrates an image of conversion from an End-to-End method to a Peer-to-Peer method;

Fig. 4 is a diagram of First Embodiment, describing details of the operation of the conversion device 100;

Fig. 5 is a diagram of First Embodiment, describing each time illustrated in Fig. 4;

Fig. 6 is a diagram of First Embodiment, illustrating a block configuration of the conversion device 100;

Fig. 7 is a diagram of First Embodiment, illustrating a case of 1-step process not including a Follow_Up message;

Fig. 8 is a diagram of First Embodiment, illustrating a hardware configuration of the conversion device 100; and

Fig. 9 is a diagram of First Embodiment, illustrating a configuration where the functions of the conversion device 100 are realized by hardware components.

**Description of Embodiment**

In the description and drawings of Embodiment, the same reference numerals are assigned to the same elements and those corresponding elements. Descriptions of elements with the same reference numeral may be appropriately omitted or simplified. In the following Embodiment, the term "unit" may be read as "circuit", "step", "procedure", "process" or "circuitry" appropriately.

First Embodiment

Hereinafter, description will be made on the conversion device 100 of First Embodiment with reference to diagrams. The conversion device 100 is a device that converts a transmission delay measurement method of an upper device to a transmission delay measurement method of a lower device when the transmission delay measurement methods differ between the upper device performing the PTP communication and the lower device performing the PTP communication. In First Embodiment, a master device 200 is assumed as the upper device, and a client device 300 is assumed as the lower device. Further, the term CF indicated below represents "CorrectionField" in a PTP message.

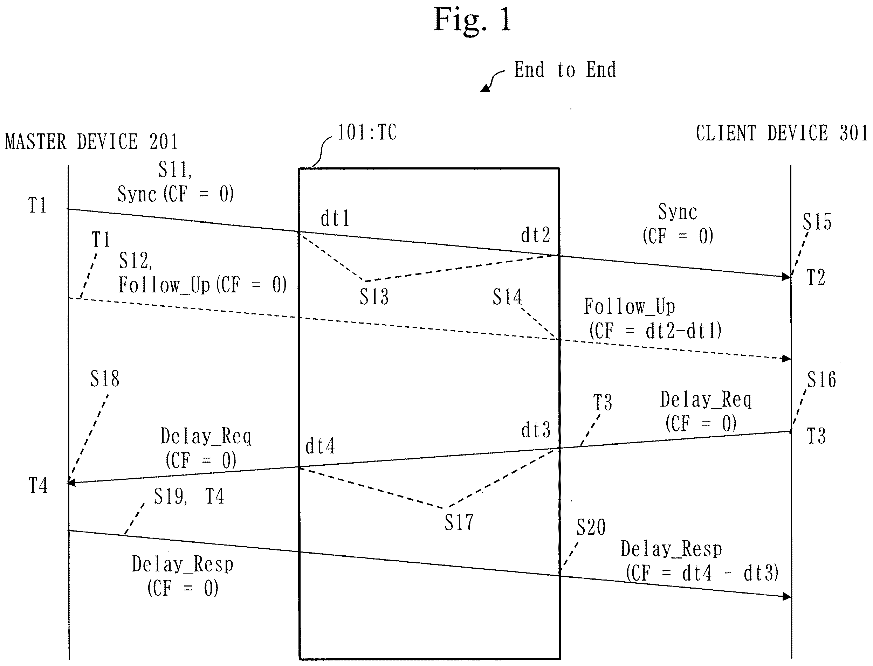

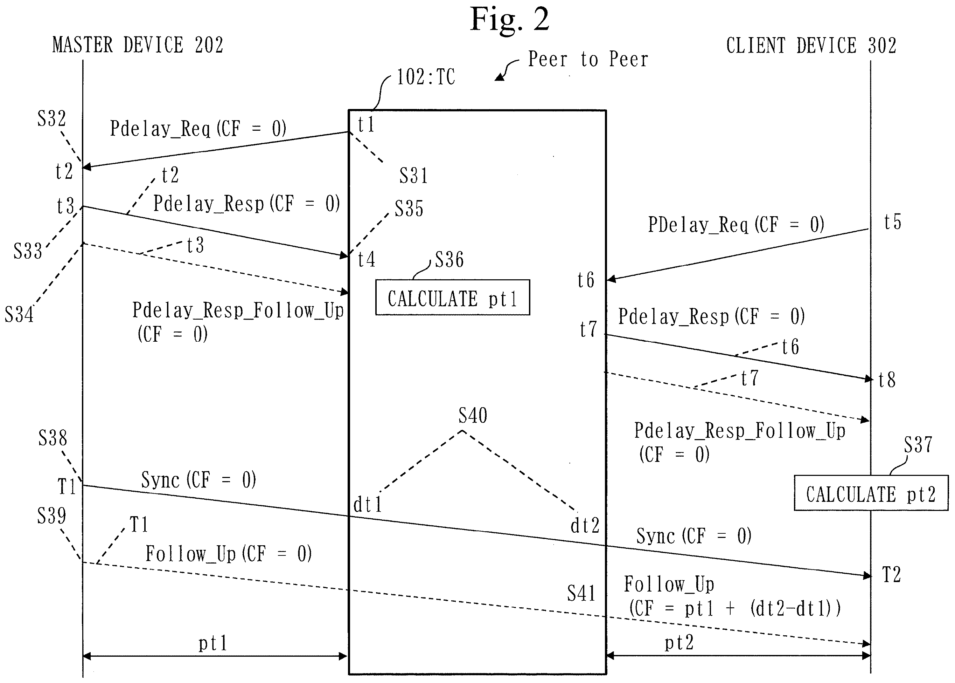

Fig. 1 describes a Transparent Clock 101 as a first comparative example of the conversion device 100. Fig. 2 describes a Transparent Clock 102 as a second comparative example of the conversion device 100. Hereafter, Transparent Clock is written as TC.

Fig. 1 is a diagram describing the operation of the TCI01 as the first comparative example. In Fig. 1, a master device 201 and a client device 301 implement a transmission delay measurement method based on an End-to-End. The TC 101 transmits packets based on the End-to-End. In Fig. 1, messages are exchanged as follows.

<End-to-End Message Exchange>

The following describes a 2-step. In the 1-step, a Follow_Up message indicated by the dashed arrow is not used.

(1) In Step S11, the master device 201 transmits a Sync message.
(2) In Step S12, the master device 201 stores a transmission time T1 of the Sync message in a Follow_Up message and transmits.
(3) In Step S13, the TC 101 records a time dt1 when the Sync message has been received and a time dt2 when the Sync message has been transmitted.
(4) In Step S14, the TC 101 stores as a processing time (hereinafter, internal processing time) inside the device of the TC 101, the internal processing time = dt2 - dt1, in the CF in the Follow_Up message, and transmits.
(5) In Step S15, the client device 301 records the time T2 when the Sync message has been received.
(6) In Step S16, the client device 301 transmits a Delay_Req message, and at this time, the client device 301 stores a transmission time T3 in the Delay_Req message and transmits.
(7) In Step S17, the TC 101 records a time dt3 when the Delay_Req message has been received, and a time dt4 when the Delay_Req message has been transmitted.
(8) In Step S18, the master device 201 records a time T4 when the Delay_Req message has been received.
(9) In Step S19, the master device 201 places T4 on the Delay_Resp message and transmits.
(10) In Step S20, the TC 101 stores the internal processing time = dt4 - dt3 of the TC101 in the CF in the Delay_Resp message, and transmits.

<Offset Calculation Method between Master Device 201 and Client Device 301>

It is possible for the client device 301 to calculate an offset as follows by using "T1, T2, T3, T4, dt2 - dt1, and dt4 - dt3" acquired through exchange of the messages above.

$$\text{Offset} = \{(T2 - T1 - (dt2 - dt1)) - (T4 - T3 - (dt4 - dt3))\}/2$$

It is possible for the client device to synchronize with the clock of the master device by correcting the clock of the client device based on the offset.

In the case of 1-step, T1 to be stored in the Follow_Up message and the internal processing time = dt2 - dt1 are placed on the Sync message and transmitted.

Fig. 2 is a diagram describing the operation of a TC 102 as the second comparative example. In Fig. 2, a master device 202 and a client device 302 implement a transmission delay measurement method based on a Peer-to-Peer. The TC 102 transmits packets based on the Peer-to-Peer. In Fig. 2, messages are exchanged as follows.

<Peer-to-Peer Message Exchange>

The following will describe the 2-step. In the 1-step, the Follow_Up message being the dashed arrow and the Pdelay_Resp_Follow_Up messages being the two dashed arrows are not used.

(1) In Step S31, the TC 102 transmits a Pdelay_Req message to the master device 202, and records a transmission time t1.
(2) In Step S32, the master device 202 records a time t2 when the Pdelay_Req message has been received.
(3) In Step S33, the master device 202 transmits a Pdelay_Resp message, records a time t3 when the Pdelay_Resp message has been transmitted, and at this time stores the reception time t2 of the Pdelay_Req message in the Pdelay_Resp message, and transmits.
(4) In Step S34, the master device 202 stores a time t3 in a Pdelay_Resp Follow_Up message, and transmits.
(5) In Step S35, the TC 102 records a time t4 when the Pdelay_Resp message has been received.
(6) In Step S36, the TC 102 calculates a transmission delay time pt1 between the master device 20 and the TC 102 by the following equation with the use of each time (t1, t2, t3 and t4).

$$\text{transmission delay time pt1} = \{(t2 - t1) + (t4 - t3)\}/2$$

(7) In Step S37, the client device 302 calculates a transmission delay time pt2 between the TC 102 and the client device 302 in a similar manner. The interactions similar to Step S31 through Step S35 is performed between the TC 102 and the client device 302. The time t1 through the time t4 from Step S31 through Step S35 correspond to the time 5 through the time t8 as illustrated in Fig. 2.

$$\text{transmission delay time pt2} = \{(t6 - t5) + (t8 - t7)\}/2$$

(8) In Step S38, the master device 202 transmits a Sync message.

(9) In Step S39, the master device 202 places and transmits the transmission time T1 of the Sync message on the Follow_Up message.

(10) In Step S40, the TC 102 records the time dt1 when the Sync message has been received and the time dt2 when the Sync message has been transmitted.

(11) In Step S41, the TC 102 stores the total value pt1 + (dt2 - dt1) of the transmission delay time pt1 between the master device 202 and the TC 102 and the internal processing time (dt2 - dt1) of the TC 102 in the CF in the Follow_Up message, and transmits.

(12) The client device 302 calculates the time T2 of the client device, which should synchronize with the transmission time T1 of the Sync message by the following equation with the use of the transmission delay time pt2 calculated in Step S37 and the total value pt1 + (dt2 - dt1) stored in the CF in the Follow_Up message.

$$\text{time T2 of the client device} = T1 + pt1 + (dt2 - dt1) + pt2$$

The time T2 calculated by the above equation is the time which has been synchronized with the master device 202.

In the case of the 1-step, transmission is performed as follows.

The time T1 and the total value (pt1 + (dt2 - dt1)) that have been stored and transmitted in the Follow_Up message are placed on the Sync message and transmitted. In this case, the total value is stored in the CF in the Sync message.

In addition, the time t3 and the time t7 that have been placed on the Pdelay_Resp_Follow_Up message and transmitted are stored in the CF in the Pdelay_Resp message and transmitted.

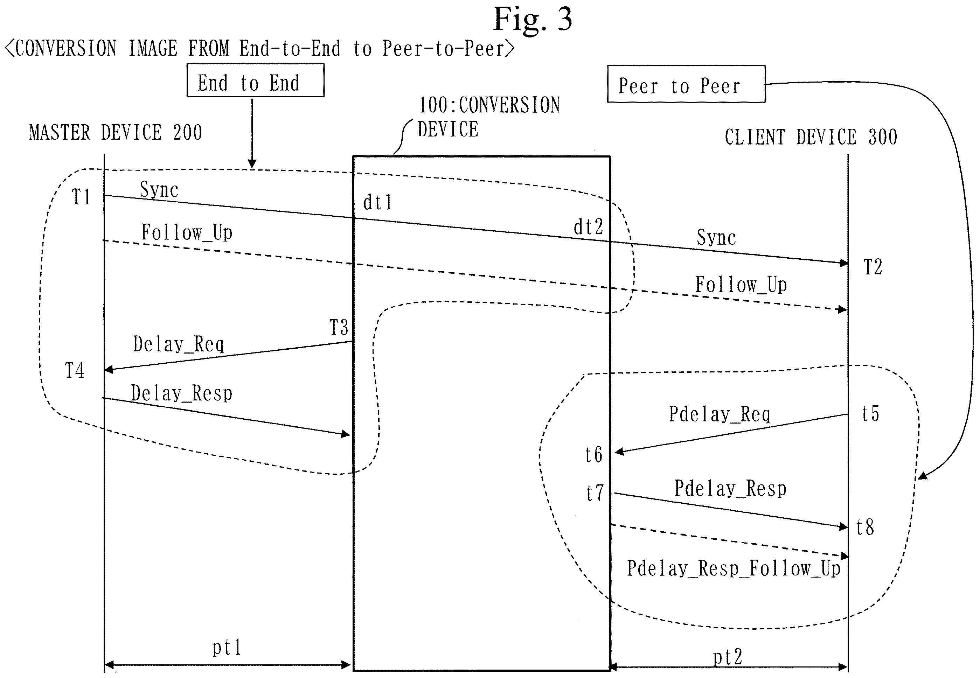

Fig. 3 is a diagram describing the outline of the operation of the conversion device 100 in First Embodiment. In Fig. 1 and Fig. 2, the TC 101 (comparative example 1) implementing the End-to-End, and the TC 102 (comparative example 1) implementing the Peer-to-Peer have been described as comparison examples of the conversion device 100. When the master device uses the transmission delay measurement method corresponding to the End-to-End, and the client device uses the transmission delay measurement method corresponding to the Peer-to-Peer, the TC 101 and the TC 102 fail to synchronize the clocks of the master device and the client device.

In contrast, even when the master device uses the transmission delay measurement method corresponding to the End-to-End, and the client device uses the transmission delay measurement method corresponding to the Peer-to-Peer, the conversion device 100 enables synchronization of clocks between the master device and the client device. In Fig. 3, the transmission delay measurement method is converted from the End-to-End to the Peer-to-Peer using the conversion device 100. Thereby, it is possible for the client device 300 to synchronize with the clock of the master device 200 even between the sections where transmission delay measurement methods differ from each other.

According to the conversion device 100, no modifications, setting or the like to the master device 200 and the client device 300 are required, and the conversion device 100 alone carries out the conversion of messages and rewriting of values. In other words, the master device 201 (Fig. 1) employing the transmission delay measurement method based on the End-to-End can be used as the master device 200 without change. Further, the client device 302 (Fig. 2) employing the Peer-to-Peer transmission delay measurement method can be used as the client device 300 without change. The master device 200 implements message exchanges as usual (End-to-End). The client device 300 implements message exchanges as usual (Peer-to-Peer). Since there are no restrictions on the master device 200 and the client device 300, the conversion device 100 can be installed between any types of PTP devices.

Note that time synchronization is implemented by adding the time taken for the conversion process by the conversion device 100 to the regular internal processing time. Therefore, there is no degradation in time accuracy due to the conversion process.

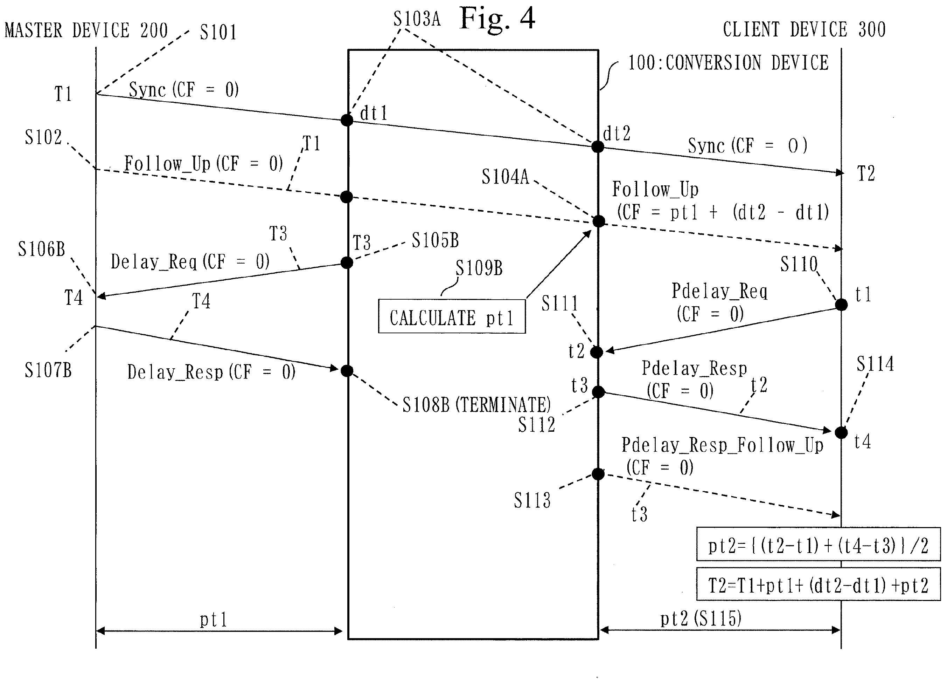

Fig. 4 is a diagram describing details of the operation of the conversion device 100 in First Embodiment.

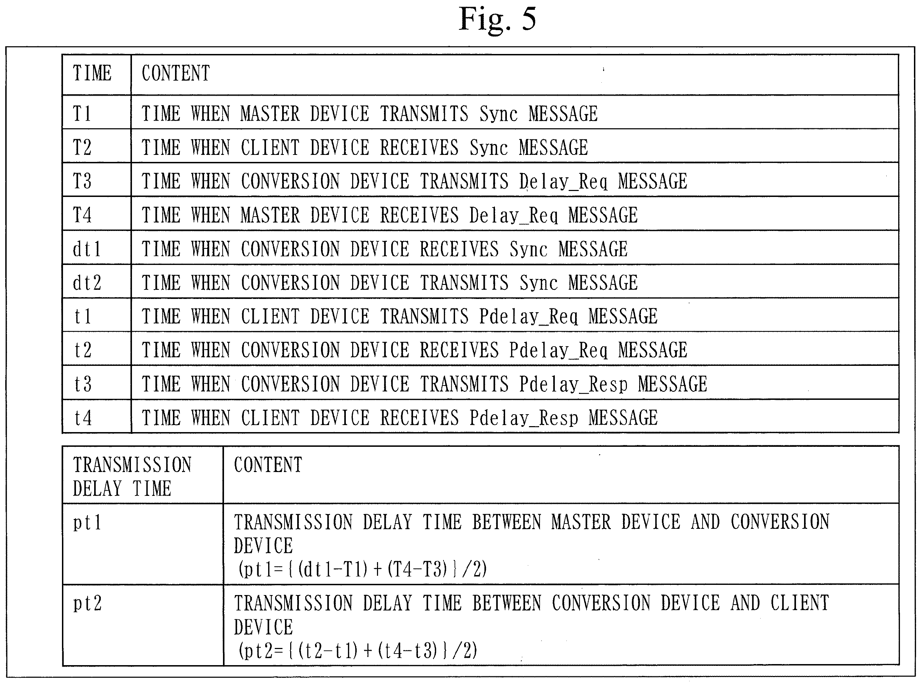

Fig. 5 is a table describing each clock indicated in Fig. 4.

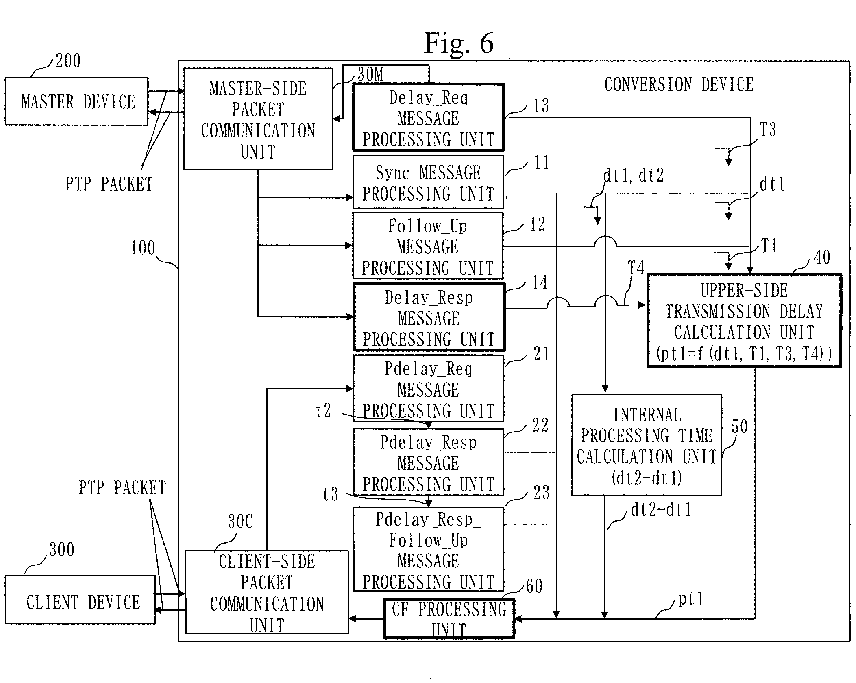

Fig. 6 illustrates the block configuration of the conversion device 100.

*** Description of Configuration ***

The configuration of the conversion device 100 will be described with reference to Fig. 6. The conversion device 100 includes a Sync message processing unit 11, a Follow_Up message processing unit 12, a Delay_Req message processing unit 13, a Delay_Resp message processing unit 14, a Pdelay_Req message processing unit 21, a Pdelay_Resp message processing unit 22, a Pdelay_Resp_Follow_Up message processing unit 23, a master-side packet communication unit 30M, a client-side packet communication unit 30C, an upper-side transmission delay calculation unit 40, an internal processing time calculation unit 50 and a CF processing unit 60.

The Sync message processing unit 11 is a first processing means. The Follow_Up message processing unit 12 is a second processing means. The Delay_Req message processing unit 13 is a third processing means. The Delay_Resp message processing unit 14 is a fourth processing means. The Pdelay_Req message processing unit 21 is a fifth processing means. The Pdelay_Resp message processing unit 22 is a sixth processing means. The Pdelay_Resp_Follow_Up message processing unit 23 is a seventh processing means. The master device 200 is an upper device. The client device 300 is a lower device. The CF processing unit 60 is a total value storage unit.

Note that each message processing unit will be hereinafter denoted as a Sync processing unit 11 and so on.

The functions of each component are as follows.

(1) <Master-Side Packet Communication Unit 30M and Client-Side Packet Communication Unit 30C>

The master-side packet communication unit 30M and the client-side packet communication unit 30C transmit and receive PTP packets to and from the master device 200 and the client device 300, respectively.

(2) <Sync Processing Unit 11>

The Sync processing unit 11 receives a Sync message from the master device 200, records the reception time dt1, and the transmission time dt2 of the Sync message to the client device 300, and performs the followings:

(a) transmitting the reception time dt1 to the upper-side transmission delay calculation unit 40;
(b) transmitting the reception time dt1 and the transmission time dt2 to the internal processing time calculation unit 50; and
(c) transmitting the Sync message to the CF processing unit 60.

(3) < Follow_Up Processing Unit 12>

The Follow_Up processing unit 12 receives a Follow_Up message (in which a Follow_Up message transmission time T1 is stored) from the master device 200, and transmits the Follow_Up message to the CF processing unit 60. The Follow_Up processing unit 12 also extracts the transmission time T1, and transmits the transmission time T1 to the upper-side transmission delay calculation unit 40.

(4) < Delay_Req Processing Unit 13>

The Delay_Req processing unit 13 performs the followings:

(a) transmitting a Delay_Req message to the master device 200;
(b) recording the transmission time T3 of the Delay_Req message; and
(c) transmitting the transmission T3 to the upper-side transmission delay calculation unit 40.

(5) < Delay_Resp Processing Unit 14>

The Delay_Resp processing unit 14 performs the followings:

(a) receiving a Delay_Resp message (in which the reception time T4 of the Delay_Req message is stored) from the master device 200, and
(b) extracting the reception time T4 from the Delay_Resp message, and transmitting the reception time T4 to the upper-side transmission delay calculation unit 40.

(6) < Pdelay_Req Processing Unit 21>

The Pdelay_Req processing unit 21 performs the followings:

(a) receiving a Pdelay_Req message from the client device 300;
(b) recording the reception time t2 of the Pdelay_Req message; and
(c) transmitting the reception time t2 to the Pdelay_Resp processing unit 22.

(7) <Pdelay_Resp Processing Unit 22>

The Pdelay_Resp processing unit 22 performs the followings:

(a) storing the reception time t2 of the Pdelay_Req in a Pdelay_Resp message, and transmitting the Pdelay_Resp message to the client device 300, and
(b) recording the transmission time t3 of the Pdelay_Resp message, and transmitting the Pdelay_Resp message to the Pdelay_Resp_Follow_Up unit 23.

(8) < Pdelay_Resp_Follow_Up Processing Unit 23>

The Pdelay_Resp_Follow_Up processing unit 23 performs the following:

(a) storing the transmission time t3 received from the Pdelay_Resp processing unit 22 in a Pdelay_Resp_Follow_Up message, and transmitting the Pdelay_Resp_Follow_Up message to the client device 300. (9) < Upper-side Transmission Delay Calculation Unit 40>

The Upper-side transmission delay calculation unit 40 performs the following.

(a) calculating the transmission delay time pt1 between the master device 200 being the upper device and the conversion device 100.
While the details will be described later, the transmission delay time pt1 is calculated by

$$ pt1 = f\left(dt1,\ T1,\ T3,\ T4\right) $$

if the equation is expressed as "f".
(b) transmitting the transmission delay time pt1 to the CF processing unit 60.

(10) <Internal Processing Time Calculation Unit 50>

The internal processing time calculation unit 50 performs the followings:

(a) calculating the internal processing time $(dt2 - dt1)$ of the conversion device 100 by using the reception time dt1 and the transmission time dt2 received from the Sync processing unit 11, and
(b) transmitting the internal processing time $(dt2 - dt1)$ to the CF processing unit 60.

(11) <CF Processing Unit 60>

The CF processing unit 60 stores values in the CF of each message.

***Description of Operation***

The operation of the conversion device 100 will be described with reference to Fig. 4. The operation of conversion device 100 corresponds to a conversion method. Further, the operation of the conversion device 100 corresponds to the processing performed by a conversion program 131.

<Flow of Message Exchange>

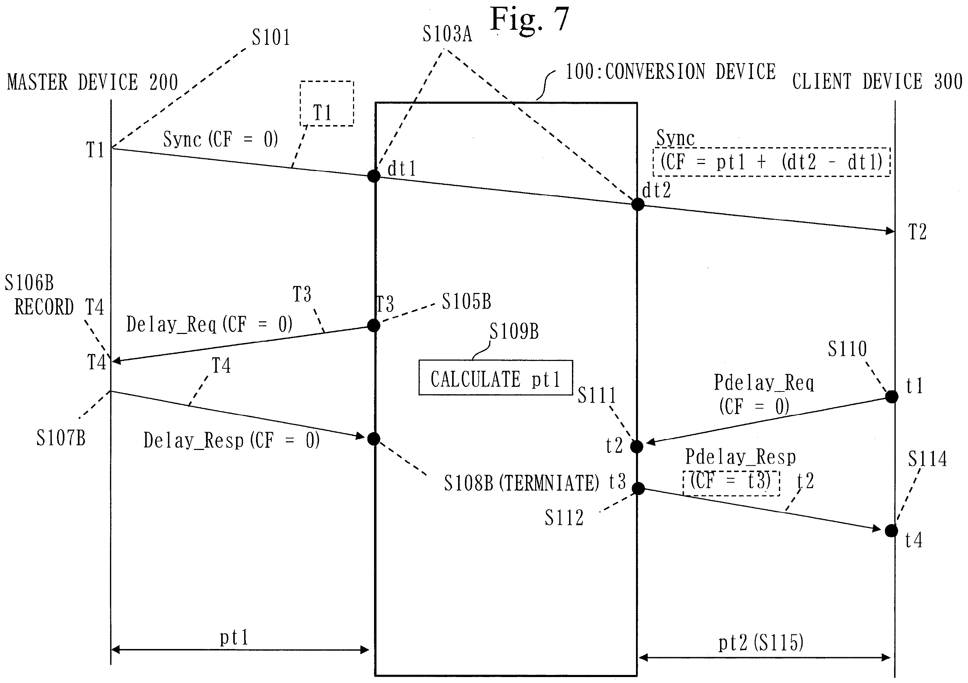

Fig. 4 describes the 2-step. In the 1-step, the Follow_Up message and the Pdelay_Resp_Follow_Up message

7

indicated by the dashed arrows are not used. The 1-step will be described later with respect to Fig. 7.

The master device 200 communicates with the conversion device 100 based on the End-to-End The clock of the client device 300 is synchronized with the clock of the master device 200 using the Peer-to-Peer method in the entire network, in other words, between the master device 200 and the client device 300.

<Step S101 and Step S102>

In Step S101, the master device 200 transmits a Sync message.

In Step S102, the master device 200 stores the transmission time T1 of the Sync message in a Follow_Up message and transmits. The following process A and process B are performed in parallel in the conversion device 100.

<Process A>

The following is a description of the process A. The process A is Step S103A and Step S104A.

<Step S103A>

The master-side packet communication unit 30M receives the Sync message. In Step S103A, the Sync processing unit 11 records the reception time dt1 of the Sync message, and transmits the Sync message to the client device 300 via the client-side packet communication unit 30C. The Sync processing unit 11 records the transmission time dt2 of the Sync message to the client device 300.

<Step S104A>

The master-side packet communication unit 30M receives the Follow_Up message. The Follow_Up processing unit 12 transmits the Follow_Up message received to the CF processing unit 60. The CF processing unit 60 stores in the CF of the Follow_Up message the total value pt1 + (dt2 - dt1) of the transmission delay time pt1 between the master device 200 and the conversion device 100, and the internal processing time (dt2 - dt1).

In Step S104A, the CF processing unit 60 transmits the Follow_Up message in which the total value above is registered to the client device 300 via the client-side packet communication unit 30C.

Note that the value of the CF in the Follow_Up message of the End-to-End is usually "dt2 - dt1". When the exchange of entire messages between the master device 200 and the conversion device 100 on the left side of Fig. 4 is regarded as one set, a value calculated one set before is used for the transmission delay time pt1.

<Process B>

The following is a description of the process B. The process B is Step S105B through Step S109B.

<Step S105B>

In Step S105B, the Delay_Req processing unit 13 transmits the Delay_Req message to the master device 200 via the master-side packet communication unit 30M. At this time, the Delay_Req processing unit 13 stores the transmission time T3 of the Delay_Req message in the Delay Req message. Note that usually, the TC only performs transfer without transmitting the Delay_Req message.

<Step S106B through Step S108B>

In Step S106B, the master device 200 records the reception time T4 of the Delay_Req message.

In Step S107B, the master device 200 stores the reception time T4 in the Delay_Resp message and transmits.

In Step S108B, the Delay_Resp processing unit 14 receives the Delay_Resp message via the master-side packet communication unit 30M, and terminates.

Note that usually, the TC only performs transfer without terminating the Delay_Resp message. The Delay_Resp processing unit 14 transmits the reception time T4 to the upper-side transmission delay calculation unit 40.

<Step S109B>

In Step S109B, the upper-side transmission delay calculation unit 40 calculates the transmission delay time pt1 between the master device 200 and the conversion device 100. The upper-side transmission delay calculation unit 40 calculates the transmission delay time pt1 by Equation 1.

$$pt1 = \{(dt1 - T1) + (T4 - T3)\}/2 \quad \text{(Equation 1)}$$

This concludes the explanation of process B.

(1) In Step S110, the client device 300 transmits a Pdelay_Req message to the conversion device 100, and records the transmission time t1.
(2) In Step S111, the Pdelay_Req processing unit 21 records the reception time t2 of the Pdelay_Req message.
(3) In Step S112, the Pdelay_Resp processing unit 22 transmits a Pdelay_Resp message, records the transmission time t3, and at this time, stores the reception time-t2 in the Pdelay_Resp message and transmits.
(4) In Step S113, the Pdelay_Resp_Follow_Up processing unit 23 stores the transmission time t3 in the Pdelay_Resp_Follow_Up message and transmits.
(5) In Step S114, the client device 300 records the reception time t4 of the Pdelay_Resp message.
(6) In Step S115, the client device 300 uses the transmission time t1, the reception time t2, the transmission time t3 and the reception time t4, and calculates the transmission delay time pt2 between the conversion device 100 and the client device 300 by Equation 2.

$$\text{transmission delay time } pt2 = \{(t2 - t1) + (t4 - t3)\} / 2 \quad \text{(Equation 2).}$$

The client device 300 implements time synchronization based on Equation 3. The time T2 is the reception time of the Sync message in the client device 300.

$$T2 = T1 + pt1 + (dt2 - dt1) + pt2 \quad \text{(Equation 3)}$$

Fig. 7 is a diagram illustrating the case of 1-step. While the 2-step is illustrated in Fig. 4, in the case of 1-step, the following operation is performed as illustrated in Fig. 7:

(1) storing in the Sync message, the transmission time T1 stored and transmitted in the Follow_Up message;
(2) placing (dt2 - dt1) on the CF in the Sync message and transmitting (dt2 - dt1) as CF = pt1 + (dt2 - dt1), where (dt2 - dt1) has been stored in the CF in the Follow_Up message; and
(3) placing the transmission time t3 on the CF in the Pdelay_Resp message and transmitting, where the transmission time t3 has been stored in the Pdelay_Resp_Follow_Up message.

<Hardware Configuration of Conversion Device 100>

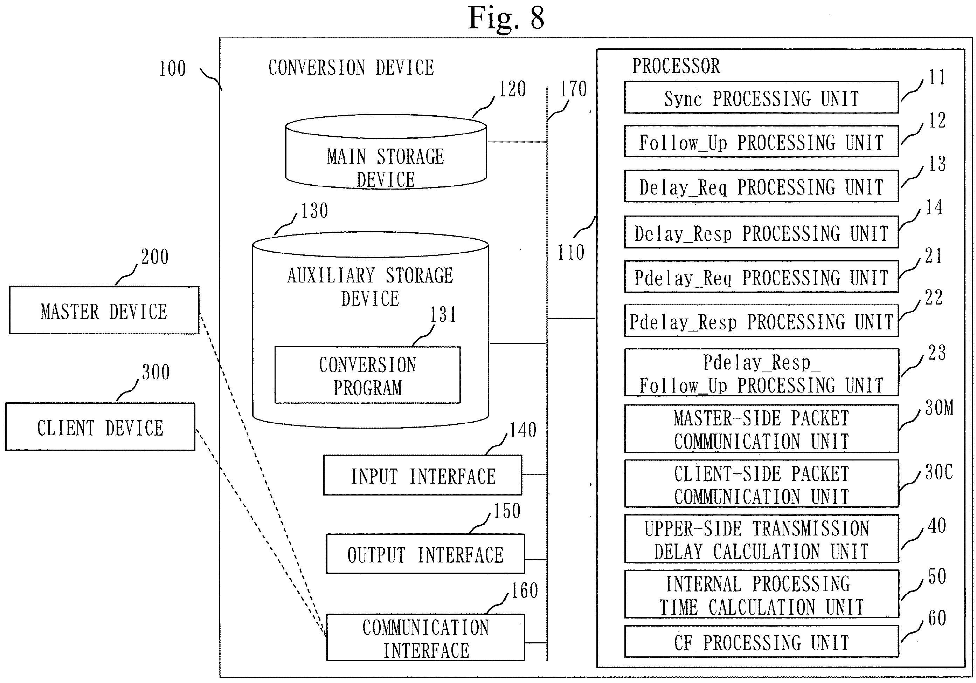

Fig. 8 illustrates the hardware configuration of the conversion device 100. Description will be made on the hardware configuration of the conversion device 100 with reference to Fig. 8.

The conversion device 100 is a computer. The conversion device 100 includes a processor 110. In addition to the processor 110, the conversion device 100 includes a plurality of hardware components. The plurality of hardware components are a main storage device 120, an auxiliary storage device 130, an input interface 140, an output interface 150 and a communication interface 160. The processor 110 is connected to the other hardware components via a signal line 170, and controls the other hardware components.

The conversion device 100 includes, as functional elements, the Sync processing unit 11, the Follow_Up processing unit 12, the Delay_Req processing unit 13, the Delay_Resp processing unit 14, the Pdelay_Req processing unit 21, the Pdelay_Resp processing unit 22, the Pdelay_Resp_Follow_Up processing unit 23, the master-side packet communication unit 30M, the client-side packet communication unit 30C, the upper-side transmission delay calculation unit 40, the internal processing time calculation unit 50 and the CF processing unit 60.

The functions of the Sync processing unit 11, the Follow_Up processing unit 12, the Delay_Req processing unit 13, the Delay_Resp processing unit 14, the Pdelay_Req processing unit 21, the Pdelay_Resp processing unit 22, the Pdelay_Resp_Follow_Up processing unit 23, the master-side packet communication unit 30M, the client-side packet communication unit 30C, the upper-side transmission delay calculation unit 40, the internal processing time calculation unit 50 and the CF processing unit 60 are realized by the conversion program 131.

The processor 110 is a device that executes the conversion program 131. By the conversion program 131 executed by the processor 110, the functions of the Sync processing unit 11, the Follow_Up processing unit 12, the Delay_Req processing unit 13, the Delay_Resp processing unit 14, the Pdelay_Req processing unit 21, the Pdelay_Resp processing unit 22, the Pdelay_Resp_Follow_Up processing unit 23, the master-side packet communication unit 30M, the client-side packet communication unit 30C, the upper-side transmission delay calculation unit 40, the internal processing time calculation unit 50, and the CF processing unit 60 are realized. The processor 110 is an IC (Integrated Circuit) that performs arithmetic processing. Concrete examples of the processor 110 are a CPU (Central Processing Unit), a DSP (Digital Signal Processor), and a GPU (Graphics Processing Unit).

Specific examples of the main storage device 120 are an SRAM (Static Random Access Memory) and a DRAM (Dynamic Random Access Memory). The main storage device 120 retains the calculation results of the processor 110.

The auxiliary storage device 130 is a storage device that stores data in a non-volatile manner. A concrete example of the auxiliary storage device 130 is an HDD (Hard Disk Drive). Further, the auxiliary storage device 130 may be a portable recording medium. As portable recording mediums, there are an SD (registered trademark) (Secure Digital) memory card, a NAND flash, a flexible disk, an optical disc, a compact disc, a Blu-ray (registered trademark) disk and a DVD (Digital Versatile Disk). The auxiliary storage device 130 stores the conversion program 131.

The input interface 140 is a port where data is inputted from each device. The output interface 150 is where various types of equipment are connected. The output interface 150 is a port where data is outputted to various types of equipment by the processor 110. The communication interface 160 is a communication port for the processor to communicate with the master device 200 and the client device 300.

The processor 110 loads the conversion program 131 from the auxiliary storage device 130 to the main storage device 120. The processor 110 reads the conversion program 131 loaded from the main storage device 120, and executes the conversion program 131. In addition to the conversion program 131, the OS (Operating System) is also stored in the main storage device 120. The processor 110 executes the conversion program 131 while executing the OS. The conversion device 100 may include a plurality of processors to substitute for the processor 110. These plurality of processors share execution of the conversion program 131. Each processor is a device that executes the conversion program 131 similarly to the processor 110. The data, information, signal values, and variable values used, processed, or outputted by the conversion program 131 are stored in the main storage device 120, the auxiliary storage device 130, or the register or cache memory in the processor 110.

The conversion program 131 is a program that causes a computer to perform each process, each procedure or each step realized by replacing "unit" with "process", "procedure" or "step" as to the Sync processing unit 11, the Follow_Up processing unit 12, the Delay_Req processing unit 13, the Delay_Resp processing unit 14, the Pdelay_Req processing unit 21, the Pdelay_Resp processing unit 22, the Pdelay_Resp_Follow_Up processing unit 23, the master-side packet communication unit 30M, the client-side packet communication unit 30C, the upper-side transmission delay calculation unit 40, the internal processing time calculation unit 50, and the CF processing unit 60.

Further, a conversion method is a method performed by executing the conversion program 131 by the conversion device 100 being a computer.

The conversion program 131 may be provided by being stored in a computer-readable recording medium, or may be provided as a program product.

<Supplement to Hardware Configuration>

In Fig. 8, the functions of the conversion device 100 are realized by software. However, the functions of the conversion device 100 may also be realized by hardware.

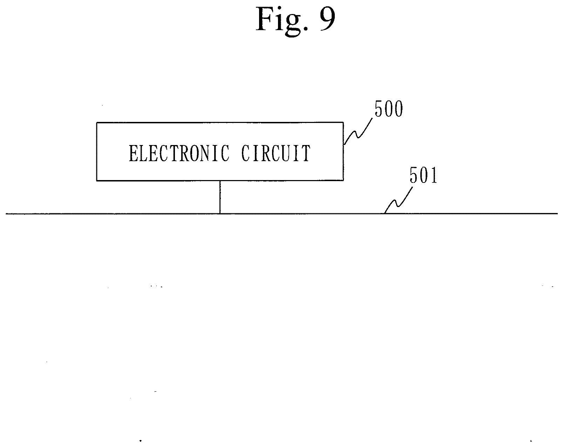

Fig. 9 illustrates a configuration where the functions of the conversion device 100 are realized by hardware. An electronic circuit 500 in Fig. 9 is a dedicated electronic circuit that realizes the functions of the Sync processing unit 11, the Follow_Up processing unit 12, the Delay_Req processing unit 13, the Delay_Resp processing unit 14, the Pdelay_Req processing unit 21, the PdelayRresp processing unit 22, the Pdelay_Resp_Follow_Up processing unit 23, the master-side packet communication unit 30M, the client-side packet communication unit 30C, the upper-side transmission delay calculation unit 40, the internal processing time calculation unit 50 and the CF processing unit 60 of the conversion device 100.

The electronic circuit 500 is connected to a signal line 501. The electronic circuit 500 is, in particular, a single circuit, a composite circuit, a programmed processor, a parallel programmed processor, a logic IC, a GA, an ASIC, or an FPGA. GA is an abbreviation for Gate Array.

ASIC is an abbreviation for Application Specinterfaceic Integrated Circuit. FPGA is an abbreviation for Field-Programmable Gate Array. The functions of the components of the conversion device 100 may be realized by a single electronic circuit, or may be realized across a plurality of electronic circuits in a distributed manner. Further, some functions of the components of the conversion device 100 may be realized by an electronic circuit, with the rest functions realized by software.

Each of the processor 110 and the electronic circuit 500 may also be referred to as processing circuitry or circuitry. In the conversion device 100, the functions of the Sync processing unit 11, the Follow_Up processing unit 12, the Delay_Req processing unit 13, the Delay_Resp processing unit 14, the Pdelay_Req processing unit 21, the Pdelay_Resp processing unit 22, the Pdelay_Resp_Follow_Up processing unit 23, the master-side packet communication unit 30M, the client-side packet communication unit 30C, the upper-side transmission delay calculation unit 40, the internal processing time calculation unit 50 and the CF processing unit 60 may be realized by the circuitry.

*** Description of Effects of First Embodiment ***

One of the reasons why it is impossible to implement time synchronization between different profiles was the difference in transmission delay measurement methods (End-to-End, Peer-to-Peer).

However, by using the conversion device 100 of First Embodiment, it is possible for the client device 300 to implement time synchronization with the master device 200 even when the transmission delay measurement methods differ between the master device 200 and the client device 300.

As a result, by using the conversion device 100, it is possible to establish connection between profiles with different transmission delay measurement methods, which eliminates the necessity to separately build time distribution networks, and has the effect of reducing equipment cost.

In the above, First Embodiment of the present disclosure has been described. Some parts of First Embodiment may be implemented in combination. Moreover, a part or some of First Embodiment may also be partially implemented. Note that the present disclosure is not limited to First Embodiment above, and various modifications can be made as necessary.

**Reference Signs List**

11: Sync processing unit; 12: Follow_Up processing unit; 13: Delay_Req processing unit; 14: Delay_Resp processing unit; 21: Pdelay_Req processing unit; 22: Pdelay_Resp processing unit; 23: Pdelay_Resp_Follow_Up processing unit; 30M: master-side packet communication unit; 30C: client-side packet communication unit; 40: upper-side transmission delay calculation unit; 50: internal processing time calculation unit; 60: CF processing unit; 100: conversion device; 101, 102: TC; 110: processor; 120: main storage device; 130: auxiliary storage device; 131: conversion program; 140: input interface; 150: output interface; 160: communication interface; 170: signal line; 200, 201, 202: master device; 300: client device.

**Claims**

1.  A conversion device to convert a transmission delay measurement method of an upper device to a transmission delay measurement method of a lower device when transmission delay measurement methods differ between the upper device that performs a precision time protocol (PTP) communication and the lower device that performs the PTP communication, the conversion device comprising:

    a Sync message processing unit to receive a Sync message that is transmitted from the upper device and record a reception time dt1, and to record a transmission time dt2 of the Sync message when the Sync message is transmitted to the lower device to be relayed;
    a Follow_Up message processing unit to extract, from a Follow_Up message in which a transmission time T1 of the Sync message from the upper device is stored and which is transmitted from the upper device, the transmission time T1 of the Sync message from the upper device;
    a Delay_Req message processing unit to transmit a Delay_Req message to the upper device, and to record a transmission time T3 of the Delay_Req message;
    a Delay_Resp message processing unit to extract, from a Delay_Resp message in which a reception time T4 of the Delay_Req message is stored and which is transmitted from the upper device, the reception time T4 of the Delay_Req message;
    a Pdelay_Req message processing unit to record a reception time t2 of a Pdelay_Req message that is transmitted from the lower device;
    a Pdelay_Resp message processing unit to store the reception time t2 of the Pdelay_Req message in a Pdelay_Resp message, and to transmit the Pdelay_Resp message in which the reception time t2 of the Pdelay_Req message is stored, to the lower device;
    a Pdelay_Resp_Follow_Up message processing unit to store a transmission time t3 of the Pdelay_Resp message in a Pdelay_Resp_Follow_Up message, and to transmit the Pdelay_Resp_Follow_Up message in which the transmission time t3 of the Pdelay_Resp message is stored, to the lower device;
    an upper-side transmission delay calculation unit to calculate a transmission delay time pt1 between the upper device and the conversion device by using the reception time dt1 of the Sync message, the transmission time T1 of the Sync message from the upper device, the transmission time T3 of the Delay_Req message, and the reception time T4 of the Delay_Req message;

an internal processing time calculation unit to calculate an internal processing time of the conversion device by using the reception time dt1 of the Sync message, and the transmission time dt2 to relay the Sync message; and

a total value storage unit to store a total value of the transmission delay time pt1 between the upper device and the conversion device, and the internal processing time of the conversion device, in a CorrectionField in the Follow_Up message, and to transmit the Follow_Up message in which the total value is stored, to the lower device to be relayed.

2. A conversion program to cause a conversion device being a computer that converts a transmission delay measurement method of an upper device to a transmission delay measurement method of a lower device when transmission delay measurement methods differ between the upper device that performs a precision time protocol (PTP) communication and the lower device that performs the PTP communication to perform:

a Sync message process to receive a Sync message that is transmitted from the upper device and record a reception time dt1, and to record a transmission time dt2 of the Sync message when the Sync message is transmitted to the lower device to be relayed;

a Follow_Up message process to extract, from a Follow_Up message in which a transmission time T1 of the Sync message from the upper device is stored and which is transmitted from the upper device, the transmission time T1 of the Sync message from the upper device;

a Delay_Req message process to transmit a Delay_Req message to the upper device, and to record a transmission time T3 of the Delay_Req message;

a Delay_Resp message process to extract, from a Delay_Resp message in which a reception time T4 of the Delay_Req message is stored and which is transmitted from the upper device, the reception time T4 of the Delay_Req message;

a Pdelay_Req message process to record a reception time t2 of a Pdelay_Req message that is transmitted from the lower device;

a Pdelay_Resp message process to store the reception time t2 of the Pdelay_Req message in a Pdelay_Resp message, and to transmit the Pdelay_Resp message, in which the reception time t2 of the Pdelay_Req message is stored, to the lower device;

a Pdelay_Resp_Follow_Up message process to store a transmission time t3 of the Pdelay_Resp message in a Pdelay_Resp_Follow_Up message, and to transmit the Pdelay_Resp_Follow_Up message in which the transmission time t3 of the Pdelay_Resp message is stored, to the lower device;

an upper-side transmission delay calculation process to calculate a transmission delay time pt1 between the upper device and the conversion device by using the reception time dt1 of the Sync message, the transmission time T1 of the Sync message from the upper device, the transmission time T3 of the Delay_Req message, and the reception time T4 of the Delay_Req message;

an internal processing time calculation process to calculate an internal processing time of the conversion device by using the reception time dt1 of the Sync message, and the transmission time dt2 to relay the Sync message; and

a total value storage process to store a total value of the transmission delay time pt1 between the upper device and the conversion device, and the internal processing time of the conversion device in a CorrectionField in the Follow_Up message, and to transmit the Follow_Up message in which the total value is stored, to the lower device to be relayed.

3. A conversion method for a conversion device being a computer that converts a transmission delay measurement method of an upper device to a transmission delay measurement method of a lower device when transmission delay measurement methods differ between the upper device that performs a precision time protocol (PTP) communication and the lower device that performs the PTP communication to perform:

a Sync message processing step to receive a Sync message that is transmitted from the upper device and record a reception time dt1, and to record a transmission time dt2 of the Sync message when the Sync message is transmitted to the lower device to be relayed;

a Follow_Up message processing step to extract, from a Follow_Up message in which a transmission time T1 of the Sync message from the upper device is stored and which is transmitted from the upper device, the transmission time T1 of the Sync message from the upper device;

a Delay_Req message processing step to transmit a Delay_Req message to the upper device, and to record a transmission time T3 of the Delay_Req message;

a Delay_Resp message processing step to extract, from a Delay_Resp message in which a reception time T4 of the Delay_Req message is stored and which is transmitted from the upper device, the reception time T4 of the Delay_Req message;

a Pdelay_Req message processing step to record a reception time t2 of a Pdelay_Req message that is transmitted from the lower device;

a Pdelay_Resp message processing step to store the reception time t2 of the Pdelay_Req message in a Pdelay_Resp message, and to transmit the Pdelay_Resp message in which the reception time t2 of the Pdelay_Req message is stored, to the lower device;

a Pdelay_Resp_Follow_Up message processing step to store a transmission time t3 of the Pdelay_Resp message in a Pdelay_Resp_Follow_Up message, and to transmit the Pdelay_Resp_Follow_Up message in which the transmission time t3 of the Pdelay_Resp message is stored, to the lower device;

an upper-side transmission delay calculation step to calculate a transmission delay time pt1 between the upper device and the conversion device by using the reception time dt1 of the Sync message, the transmission time T1 of the Sync message from the upper device, the transmission time T3 of the Delay_Req message, and the reception time T4 of the Delay_Req message;

an internal processing time calculation step to calculate an internal processing time of the conversion device by using the reception time dt1 of the Sync message, and the transmission time dt2 to relay the Sync message; and

a total value storage step to store a total value of the transmission delay time pt1 between the upper device and the conversion device, and the internal processing time of the conversion device, in a CorrectionField in the Follow_Up message, and to transmit the Follow_Up message in which the total value is stored, to the lower device to be relayed.

# Fig. 1

End to End

# Fig. 2

MASTER DEVICE 202                                                                    CLIENT DEVICE 302

102:TC            Peer to Peer

S32    Pdelay_Req (CF = 0)                    t1

t2                                              S31
                  t2
t3    Pdelay_Resp (CF = 0)                     S35                    PDelay_Req (CF = 0)              t5

S33        t3                                  t4        S36          t6

S34                                           CALCULATE pt1

      Pdelay_Resp_Follow_Up                                           t7    Pdelay_Resp (CF = 0)
      (CF = 0)                                                                        t6

                                                                           t7                        t8

                                                        S40          Pdelay_Resp_Follow_Up
S38                                                                  (CF = 0)                    S37

T1    Sync (CF = 0)                                                                        CALCULATE pt2

S39        T1                                  dt1                   dt2    Sync (CF = 0)

      Follow_Up (CF = 0)                                                                              T2

                                                        S41          Follow_Up
                                                                     (CF = pt1 + (dt2-dt1))

      |←——————————— pt1 ———————————→|          |←——————————— pt2 ———————————→|

EP 4 708 761 A1

# Fig. 3

<CONVERSION IMAGE FROM End-to-End to Peer-to-Peer>

End to End

Peer to Peer

100:CONVERSION DEVICE

MASTER DEVICE 200

CLIENT DEVICE 300

T1 — Sync — dt1 — dt2 — Sync — T2

Follow_Up — Follow_Up

T3 — Delay_Req — T4

Delay_Resp

Pdelay_Req — t5 — t6

t7 — Pdelay_Resp — t8

Pdelay_Resp_Follow_Up

pt1

pt2

EP 4 708 761 A1

Fig. 4

# Fig. 5

| TIME | CONTENT |
|---|---|
| T1 | TIME WHEN MASTER DEVICE TRANSMITS Sync MESSAGE |
| T2 | TIME WHEN CLIENT DEVICE RECEIVES Sync MESSAGE |
| T3 | TIME WHEN CONVERSION DEVICE TRANSMITS Delay_Req MESSAGE |
| T4 | TIME WHEN MASTER DEVICE RECEIVES Delay_Req MESSAGE |
| dt1 | TIME WHEN CONVERSION DEVICE RECEIVES Sync MESSAGE |
| dt2 | TIME WHEN CONVERSION DEVICE TRANSMITS Sync MESSAGE |
| t1 | TIME WHEN CLIENT DEVICE TRANSMITS Pdelay_Req MESSAGE |
| t2 | TIME WHEN CONVERSION DEVICE RECEIVES Pdelay_Req MESSAGE |
| t3 | TIME WHEN CONVERSION DEVICE TRANSMITS Pdelay_Resp MESSAGE |
| t4 | TIME WHEN CLIENT DEVICE RECEIVES Pdelay_Resp MESSAGE |

| TRANSMISSION DELAY TIME | CONTENT |
|---|---|
| pt1 | TRANSMISSION DELAY TIME BETWEEN MASTER DEVICE AND CONVERSION DEVICE<br>$(pt1 = \{(dt1 - T1) + (T4 - T3)\}/2)$ |
| pt2 | TRANSMISSION DELAY TIME BETWEEN CONVERSION DEVICE AND CLIENT DEVICE<br>$(pt2 = \{(t2 - t1) + (t4 - t3)\}/2)$ |

EP 4 708 761 A1

Fig. 6

# Fig. 7

MASTER DEVICE 200     100:CONVERSION DEVICE    CLIENT DEVICE 300

S101

S103A

T1

Sync (CF = 0)

dt1

Sync
(CF = pt1 + (dt2 − dt1))

dt2

T2

S106B
RECORD T4

T3    T3    S105B

Delay_Req (CF = 0)

S109B

T4    T4

S110

CALCULATE pt1

Pdelay_Req
(CF = 0)

t1

S111

S107B

Delay_Resp (CF = 0)

t2

S108B (TERMNIATE) t3

Pdelay_Resp
(CF = t3)   t2

S114

S112

t4

pt1

pt2 (S115)

EP 4 708 761 A1

# Fig. 8

CONVERSION DEVICE 100

MAIN STORAGE DEVICE 120

AUXILIARY STORAGE DEVICE 130

CONVERSION PROGRAM 131

MASTER DEVICE 200

CLIENT DEVICE 300

INPUT INTERFACE 140

OUTPUT INTERFACE 150

COMMUNICATION INTERFACE 160

170

110

PROCESSOR

Sync PROCESSING UNIT 11

Follow_Up PROCESSING UNIT 12

Delay_Req PROCESSING UNIT 13

Delay_Resp PROCESSING UNIT 14

Pdelay_Req PROCESSING UNIT 21

Pdelay_Resp PROCESSING UNIT 22

Pdelay_Resp_Follow_Up PROCESSING UNIT 23

MASTER-SIDE PACKET COMMUNICATION UNIT 30M

CLIENT-SIDE PACKET COMMUNICATION UNIT 30C

UPPER-SIDE TRANSMISSION DELAY CALCULATION UNIT 40

INTERNAL PROCESSING TIME CALCULATION UNIT 50

CF PROCESSING UNIT 60

# Fig. 9

ELECTRONIC CIRCUIT — 500

501

## INTERNATIONAL SEARCH REPORT

| International application No. |
| --- |
| **PCT/JP2024/017885** |

### A. CLASSIFICATION OF SUBJECT MATTER

*H04L 7/00*(2006.01)i
FI: H04L7/00 990

According to International Patent Classification (IPC) or to both national classification and IPC

### B. FIELDS SEARCHED

Minimum documentation searched (classification system followed by classification symbols)

H04L7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2020-184710 A (HITACHI, LTD.) 12 November 2020 (2020-11-12) | 1-3 |
| A | JP 2017-98694 A (FUJITSU LIMITED) 01 June 2017 (2017-06-01) | 1-3 |

☐ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **10 July 2024** | **23 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/017885**

| Patent document cited in search report | | | Publication date (day/month/year) | Patent family member(s) | | | Publication date (day/month/year) |
|---|---|---|---|---|---|---|---|
| JP | 2020-184710 | A | 12 November 2020 | US | 2022/0131681 | A1 | |
| | | | | WO | 2020/225954 | A1 | |
| | | | | EP | 3968562 | A1 | |
| JP | 2017-98694 | A | 01 June 2017 | US | 2017/0150464 | A1 | |

Form PCT/ISA/210 (patent family annex) (July 2022)